Europäisches Patentamt

European Patent Office

Office européen des brevets

(19)

(11)    EP 1 675 387 A2

(12)    EUROPEAN PATENT APPLICATION

(43) Date of publication:
    28.06.2006   Bulletin 2006/26

(51) Int Cl.:
    *H04N 5/238* (2006.01)

(21) Application number: 05112310.7

(22) Date of filing: 16.12.2005

(84) Designated Contracting States:
    AT BE BG CH CY CZ DE DK EE ES FI FR GB GR
    HU IE IS IT LI LT LU LV MC NL PL PT RO SE SI
    SK TR
    Designated Extension States:
    AL BA HR MK YU

(30) Priority: 21.12.2004   KR 2004109165

(71) Applicant: Samsung Electronics Co., Ltd.
    Yeongtong-gu
    Suwon-si, Gyeonggi-do (KR)

(72) Inventors:
    • Choi, Dong-bum
      Gyeonggi-do (KR)

    • Kim, Moon-cheol
      335-204 Cheongmyeong Byeosan Apt.,
      Yeongtong-gu, Suwon-si, Gyeonggi-do (KR)
    • Kim, Soo-young
      Yeongtong-gu, Suwon-si, Gyeonggi-do (KR)
    • Kim, Dong-hwan
      Deokyang-gu, Goyang-si, Gyeonggi-do (KR)

(74) Representative: Walaski, Jan Filip et al
    Venner Shipley LLP
    20 Little Britain
    London EC1A 7DH (GB)

(54)    **Image sensing device**

(57)    The invention relates to an image sensing device provided with a wide dynamic range by using an optical limiter, and an image pickup apparatus using the same. The image sensing device includes an optical limiter for converting an input image into a non-linear image at an intensity greater than a threshold intensity, and an image sensor for converting the non-linear input image into an electrical signal. By forming the optical limiter capable of outputting a non-linear image with respect to the intensity of light on the image pickup surface of the image sensor, the dynamic range of the image sensing device can be expanded without using a separate device.

# FIG. 3

EP 1 675 387 A2

**Description**

The present invention relates to an image sensing device, particularly but not exclusively to an image sensing device having a wide dynamic range using a non-linear optical limiter and an image pickup apparatus using the same.

The dynamic range is one of the determining factors of the performance of an image sensor, and indicates the ratio between the smallest and largest possible values of changeable quantity (e.g., the intensity range of the optical signal to be processed into an image). In particular, the dynamic range (DR) of an image sensing device is defined as the ratio of the saturation level (in one example the effective maximum detectable signal level) to the noise level of the pixel. This is shown in Equation 1.

[Equation 1]

$$D = 20\log_{10}\left(\frac{Saturation\text{-}level}{Noise}\right)$$

where 'D' denotes the dynamic range of an image sensor, 'Noise' denotes a signal noise and 'Saturation-level' denotes the saturation level of a pixel.

For example, if an image sensor senses about 200,000 electrons when saturated, and about 40 electrons when noise exists, then the dynamic range of the image sensor is approximately $20\log_{10} (5,000)$, or approximately -75dB.

Meanwhile, if a dark area and a bright area are mixed on a screen, each area is usually distinguished by adjusting the exposure time of the image sensor for input light. However, since adjusting the exposure time is not always sufficient for distinguishing all of the areas, it can be desirable to expand the dynamic range of an image sensor.

There are several methods for expanding the dynamic range of an image sensor, for instance determining the saturation time of pixels, differentiating the exposure time by pixels, and outputting the rate of increase of a signal charge.

In the related art, the method involving determining and outputting saturation time involves outputting the exposure time, not but reading the charge or voltage of a pixel. More specifically, the arrival time for an output signal of a light receiving element at a threshold voltage designating the potential of a photodiode of the image sensor punctually, or the time immediately before the arrival, is output through a counter using a comparator circuit instead of an A/D converter (Analogue to Digital Converter). In other words, the comparator circuit, not the A/D converter, checks the time at which the output signal reaches the threshold voltage, and digitally converts the discrete value of the stored charge. These processes can therefore be realized through the comparator circuit alone.

On the other hand, the method for differentiating the exposure time by pixels has been widely used for maintaining a signal level and realizing a wide dynamic range by shortening the exposure time for a pixel to which light of strong intensity is incident, while extending the exposure time for a pixel to which light of weak intensity (e.g., a dark video signal) is incident. Despite these merits, the method is not preferred because it requires an additional circuit for adjusting the exposure time based on the pixels.

The present invention aims to address the above problems.

The present invention to provides an image sensing device with a wide dynamic range, capable of making an input image to an image sensor be non-linear with respect to the intensity of light by means of an optical limiter, and an image pickup apparatus using the same.

According to an aspect of the present invention, there is provided an image sensing device, including: an optical limiter for converting an input image into a non-linear image at an intensity greater than a threshold intensity; and an image sensor for converting the non-linear input image into an electrical signal.

The image sensor includes: a micro lens for condensing an input light; a colour filter for extracting a specific colour signal out of signals inputted from the micro lens; and a substrate for converting the extracted colour signal into an electrical signal.

The optical limiter is formed at a threshold distance away from an image pickup surface of the image sensor.

In another exemplary embodiment, the optical limiter is deposited on an upper portion of the image pickup surface of the image sensor.

The image sensor is either a CCD (Charge Coupled Device) or a CMOS (Complementary Metal Oxide Semiconductor).

In an exemplary embodiment, the threshold intensity is smaller than an intensity having a saturated output value of the image sensor without using the optical limiter.

Another aspect of the present invention provides an image pickup apparatus using an image sensing device with a wide dynamic range, the apparatus including: an optical limiter for converting and outputting an input image into a non-linear image at an intensity greater than a threshold intensity; an image sensor for photoelectrically converting the output image from the optical limiter; a converter for converting and outputting the image from the image sensor into a digital signal; and a signal processor performs signal processing necessary for displaying the input image from the converter.

The image sensor includes: a micro lens for condensing an input light; a colour filter for extracting a specific colour signal out of signals inputted from the micro lens; and a substrate for converting the extracted colour signal into an electrical signal.

The optical limiter is formed at a threshold distance away from an image pickup surface of the image sensor.

In another exemplary embodiment, the optical limiter is deposited on an upper portion of the image pickup surface of the image sensor.

The image sensor is either a CCD (Charge Coupled Device) or a CMOS (Complementary Metal Oxide Semiconductor).

In an exemplary embodiment, the threshold intensity is smaller than an intensity having a saturated output value of the image sensor without using the optical limiter.

Embodiments of the invention will now be described, by way of example, with reference to the accompanying drawings, in which:

Figure 1 illustrates an image sensing device with a wide dynamic range according to an exemplary embodiment;
Figure 2A and Figure 2B illustrate, respectively, an image sensing device with a wide dynamic range according to another exemplary embodiment;
Figure 3 is a schematic block diagram of an image pickup apparatus using an image sensing device with a wide dynamic range according to an exemplary embodiment; and
Figure 4 is a diagram illustrating the dynamic range expansion of an image sensing device according to yet another exemplary embodiment.

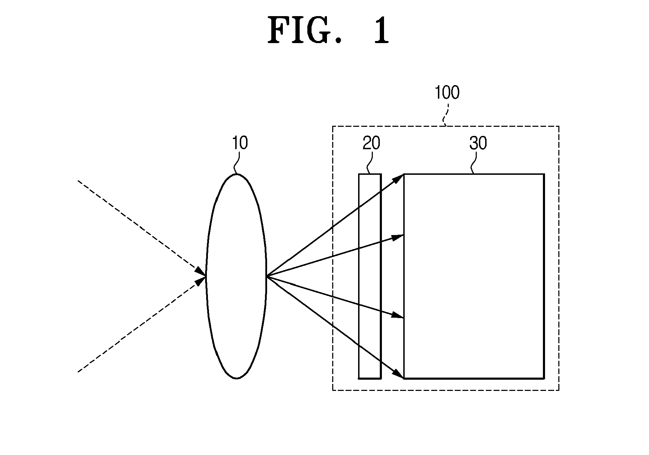

Figure 1 illustrates an image sensing device with a wide dynamic range according to an exemplary embodiment of the present invention. The image sensing device 100 includes an optical limiter 20 and an image sensor 30.

The optical limiter 20 converts an input image that has been transmitted through a lens 10 to a non-linear image with respect to the intensity of a light, and outputs the converted image to the image sensor 30. The optical limiter 20 is installed at a threshold distance from the image pickup or capture surface of the image sensor 30. As can be seen in Figure 1, the threshold distance is arranged such that all received light that has been transmitted through the lens 10 is received at the image sensor 30 via the optical limiter 20. If the optical limiter 20 is installed further than the threshold distance from the image pickup surface of the image sensor 30, part of the image passing through the optical limiter 20 is scattered and is not inputted to the image sensor 30, which can result in a degradation in image quality or loss of the image.

As the optical limiter 20 outputs a non-linear image with respect to the intensity of received light, the image sensor 30 receives and also outputs non-linear image data. In other words, the optical limiter 20 gives the image sensor 30 a light intensity response such that images having a greater intensity than a threshold intensity can be outputted as clear images with substantially the same brightness. In this manner, deterioration of resolution can be substantially prevented. In summary, the optical limiter 20 expands the range of input intensities that do not result in a saturation of the output brightness.

Upon receiving a non-linear image from the optical limiter 20, the image sensor 30 converts the input image into an electric signal. The image sensor 30 includes a micro lens, a colour filter, and a substrate.

The micro lens improves the optical efficiency by condensing or focusing input light onto the pixels of the image sensor. The colour filter extracts a specific colour signal among many input signals from the micro lens. Lastly, the substrate is formed of a photodiode and a transfer electrode, for photoelectrically converting an input signal from the colour filter into an electric signal, and outputting the signal.

Examples of the image sensor 30 include a CCD (Charge Coupled Device) image sensor for transferring electrons generated in response to received light to an output unit using a gate pulse, and a CMOS image sensor for converting electrons generated in response to received light into a voltage within each pixel and outputting the voltage via a plurality of CMOS (Complementary Metal Oxide Semiconductor) switches.

Moreover, the image sensor 30 accumulates charge based on the intensity of received light, and outputs a voltage corresponding to the quantity of accumulated charge, thereby determining the brightness of an image. However, because the image sensor 30 cannot accumulate charges with higher intensities than a threshold intensity, the same brightness is given to an image for those intensities higher than the threshold intensity. In other words, a saturation point is reached.

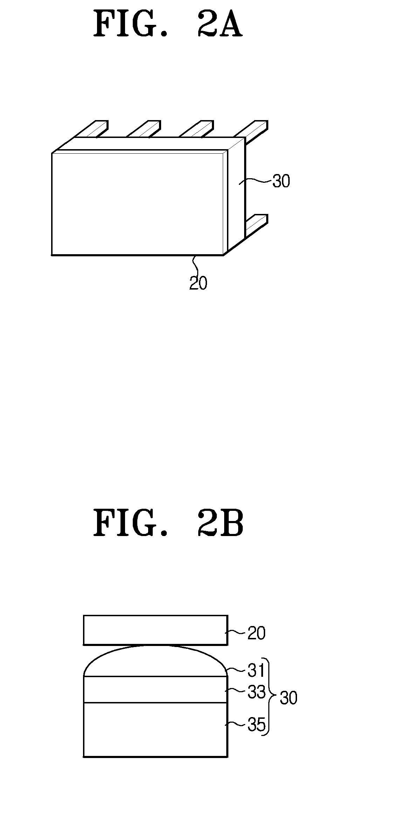

Figures 2A and 2B illustrate an image sensing device 100 with a wide dynamic range according to another exemplary embodiment of the present invention. The image sensing device 100 in this embodiment is different from Figure 1 in that an optical limiter 20 is deposited on the image pickup surface of an image sensor 30.

Referring to Figures 2A and 2B, the image sensing device 100 includes an image sensor 30 and an optical limiter 20 formed on the image pickup surface of the image sensor 30. The image sensor 30 includes a micro lens 31, a colour filter 33, and a substrate 35.

Figures 2A and 2B are perspective and cross-sectional views, and illustrate an image sensing device 100 in which glass is not formed on the upper portion of the image pickup surface of the image sensing device 100. However, glass can optionally be formed on the upper portion of the optical limiter 20, such that the optical limiter 20 is disposed between the image sensor 30 and the glass. In this case, the glass is formed in the pixel unit for increasing the optical efficiency of the image sensing device 100.

The functions of the micro lens 31, the colour filter 33 and the substrate 35 of the image sensor 30 are substantially the same as those in Figure 1. More specifically, the micro lens 31 improves the optical efficiency by condensing input light onto the pixels of the image sensing device 100. The colour filter 33 extracts a specific colour signal among many input signals from the micro lens. Lastly, the substrate 35 is formed of a photodiode and a transfer electrode, for photoelectrically converting an input signal from the colour filter 33 into an electric signal, and outputting the signal.

In the foregoing embodiment, the optical limiter 20 is formed as a coating on the upper portion of the micro lens 31 of the image sensor 30. However, the present invention is not limited thereto.

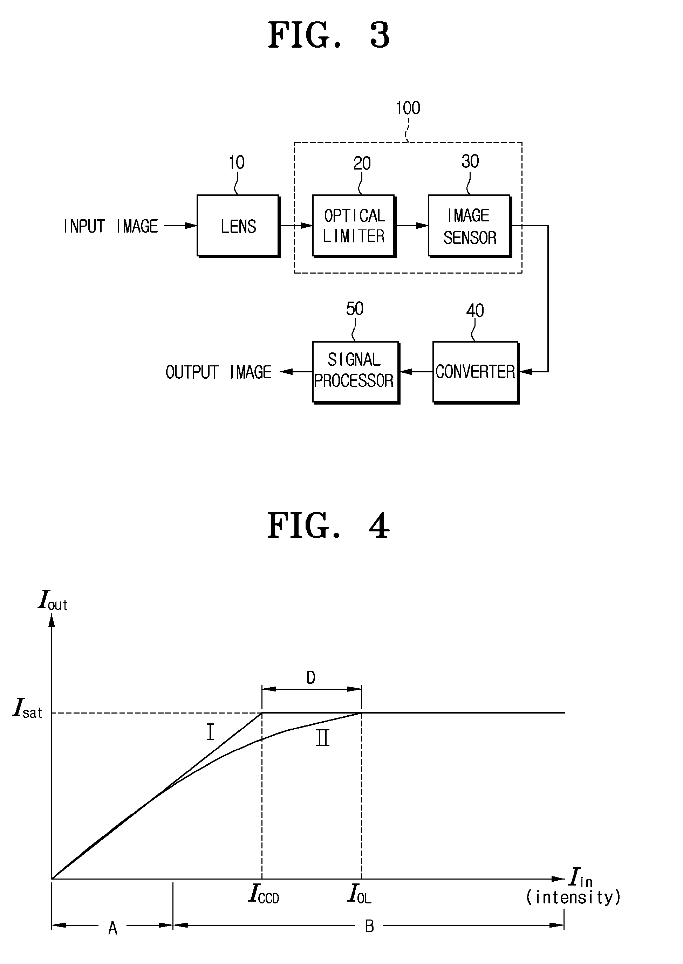

Figure 3 is a schematic block diagram of an image pickup apparatus using an image sensing device with a wide dynamic range according to an exemplary embodiment.

Referring to Figure 3, the image pickup apparatus includes a lens 10, an optical limiter 20, an image sensor 30, a converter 40, and a signal processor 50. Here, the optical limiter 20 and the image sensor 30 constitute an image sensing device 100.

The lens 10 focusesreceived light onto the optical limiter 20.

Through the optical limiter 20, an input image from the lens 10 is then converted into a non-linear image with respect to the intensity of the light. As a result, the image sensor 30 to which the image from the optical limiter 20 is input outputs a value that has a non-linear light intensity characteristic.

The optical limiter 20 is formed on the upper portion of the image pickup surface of the image sensor 30. More specifically, the optical limiter 20 is either deposited on the image pickup surface of the image sensor 30 or formed at a threshold distance from the image pickup surface of the image sensor 30. The threshold distance is a distance such that input images transmitted through the lens 10 to be inputted to the image sensor 30 do so via the optical limiter 20. If the optical limiter 20 is installed above a threshold distance from the image pickup surface of the image sensor 30, part of the image passing through the optical limiter 20 is scattered and is not input to the image sensor 30, resulting in degredation or loss of the image.

The image sensor 30 converts the input image from the optical limiter 20 into an electrical signal. More specifically, the image sensor 30 senses a signal charge generated in proportion to the intensity of an input light to the image sensor 30 as an analogue voltage. Since the image sensor 30 has a linear characteristic, the output image from the image sensor 30, like the output from the optical limiter 20, has a non-linear light intensity characteristic.

Output values from the image sensor 30 have a non-linear characteristic with respect to light intensities higher than a threshold intensity. In other words, similar to the case where the optical limiter 20 is not formed on the upper portion of the image pickup surface of the image sensor 30, if the intensity of the input light is below the threshold intensity, the output value of the image sensor 30 has a linear characteristic with respect to the intensity of the input light. At this time, the threshold intensity is lower than the input intensity having a saturated output value when the optical limiter 20 is not formed on the upper portion of the image pickup surface of the image sensor 30.

When the optical limiter is not used, the output value of the image sensor 30 has a non-linear characteristic with a starting intensity that is lower than the input intensity having the saturated output value. Thus, the input intensity having a saturated output value if the optical limiter 20 is utilized is greater than the input intensity having a saturated output value if the optical limiter 20 is not utilized.

As discussed above with reference to Figure 1 and Figures 2A to 2C, the image sensor 30 includes the micro sensor 31, the colour filter 33 and the substrate 35.

The converter 40 converts an electrical signal inputted from the image sensor 30 into a digital signal. That is, the converter 40 is an A/D converter (Analogue to Digital Converter).

The signal processor 50 performs signal processing necessary for displaying an input image from the converter 40.

Figure 4 graphically illustrates the expansion of a dynamic range of the image sensing device 100 according to an exemplary embodiment. In Figure 4, the X-axis denotes the intensity of input light (i.e., the input intensities) to the image sensing device 100, and the Y-axis denotes the output of the image sensor 30. Line 'I' illustrates the output of the image sensor 30 when the optical limiter 20 is not used, whereas line 'II' illustrates the output of the image sensor 30 when the optical limiter 20 is used.

In the graph, $I_{sat}$ is a saturated output value of the image sensor 30; $I_{CCD}$ is a minimum intensity among intensities having a saturated output value when the optical limiter 20 is not used; and $I_{OL}$ is a value of the intensity having a saturated output value when the optical limiter 20 is used.

The interval A illustrates the range of intensities for which the output value of the image sensor 30 of Line I have a linear characteristic, and the interval B illustrates the range of intensities for which the output value of the image sensor 30 of Line I have a non-linear characteristic. The interval D represents light intensities for which the image sensor 30 with the optical limiter 30 has a non-linear output. In this case, the dynamic range of the image sensor 30 is expanded.

In particular, in the case of line I where the optical limiter 20 is not used, the output of the image sensor 30 is linear until reaching the intensity $I_{CCD}$ having a saturated output value, but it remains constant (i.e., the same saturated output value) at the intensities greater than $I_{CCD}$.

On the other hand, in case of line II where the optical limiter 20 is used, the output of the image sensor 30 is non-linear with respect to input light intensities. This non-linear characteristic occurs after a threshold intensity. More specifically, below the threshold intensity, i.e. in interval A, the output values of the image sensor 30 are linear and substantially similar to those obtained when the optical limiter 20 is not formed on the upper portion of the image pickup surface of the image sensor 30.

However, above the threshold intensity, i.e. in the interval B, the output of the image sensor 30 is non-linear. This is in contrast to the output obtained when the optical limiter 20 is not formed on the upper portion of the image pickup surface of the image sensor 30. In the interval having non-linear output values, the rate of increase in the output values with respect to the intensity of received light is relatively small compared to that of the linear output values.

Therefore, the intensity $I_{OL}$ having a saturated output value on the graph II where the optical limiter 20 is used is greater than the intensity $I_{CCD}$ having a saturated output value on the graph I where the optical limiter 20 is not used. However, if the optical limiter 20 is used as in graph II, the output values of the image sensor 30 at higher intensities than $I_{CCD}$ are not necessarily equal to the output value of $I_{CCD}$, but smaller than the output value of $I_{CCD}$.

Therefore, the output values of the image sensor 30 increase non-linearly from the intensity $I_{CCD}$ (i.e., the intensity of a saturated output value in the case when the optical limiter 20 is not used). Additionally, the output value at the intensity $I_{OL}$ (i.e., the intensity of a saturated output value in the case when the optical limiter 20 is used) becomes equal to the output value of the saturated intensity $I_{CCD}$ (i.e., the intensity when the optical limiter 20 is not used, please refer to the graph I). The output of the image sensor 30 can be obtained from the Equations below.

[Equation 2]

$$f_{CCD}(I_{CCD})=f_{CCD}(I_{OL})=I_{sat}$$

[Equation 3]

$$f_{OL-CCD}(I_{CCD})<f_{OL-CCD}(I_{OL})=I_{sat}$$

where $f_{CCD}$ in Equation 2 indicates an output characteristic when the optical limiter 20 is not used, and $f_{OL-CCD}$ in Equation 3 indicates an output characteristic when the optical limiter 20 is used.

As Equation 2 shows, if the optical limiter 20 is not used, the output values (i.e., the saturated output values) at $I_{CCD}$ and $I_{OL}$ are equal to the output value at $I_{sat}$. However, as Equation 3 shows, if the optical limiter 20 is used, the output value (i.e., the saturated output value when not using optical limiter) at $I_{CCD}$ is smaller than the output value at $I_{OL}$ (i.e., the saturated output value when using optical limiter). Although the output value at $I_{OL}$ equals the output value at $I_{CCD}$ when the optical limiter 20 is not used, the output value at $I_{OL}$ is smaller than the output value at $I_{CCD}$, meaning it is not yet saturated.

Therefore, by using the optical limiter 20 in interval D, where interval D ranges from the intensity $I_{CCD}$ (i.e., the saturated output value when the optical limiter 10 is not used) to the intensity $I_{OL}$ (i.e., the saturated value when the optical limiter used 20), the output values of the image sensor 30 become diversified.

By diversifying the output values of the image sensor 30 with respect to the intensities in the interval D, it becomes possible to display an image with different levels of brightness even at intensities in the interval D. Namely, the dynamic range (i.e., the index, indicating the range between the minimum optical signal and the maximum optical signal that can be treated) of the image sensing device 100 is increased.

In doing so, the non-linear characteristic interval where the rate of change in output values with respect to the input intensity decreases must include the intensity $I_{CCD}$ having a saturated output value (i.e., the value where the image sensing device 100 without the optical limiter 20 causes saturation of the intensity). That is, the non-linear characteristic should appear from a lower intensity level than the $I_{CCD}$ having a saturated output value when the optical limiter 20 is not used. This is so because, if the optical limiter 20 is used, the output value of the $I_{CCD}$ is smaller than the output value of the $I_{sat}$ only if the intensity at the start point of the interval B showing the non-linear characteristic is smaller than the $I_{CCD}$. As such, the saturation occurs at the $I_{OL}$, which is greater than the $I_{CCD}$, resulting in the expansion of the dynamic range of the image sensing device.

The expansion rate of the dynamic range of the image sensing device 100 can be obtained by Equation 4 below.

[Equation 4]

$$DR=\frac{I_{OL}-I_{CCD}}{I_{OL}}$$

wherein, DR is an expansion rate of the dynamic range, $I_{CCD}$ is an intensity having a saturated value when the optical limiter 20 is not used and $I_{OL}$ is an intensity having a saturated value when the optical limiter 20 is used.

Accordingly, the optical limiter formed on the image pickup surface of the image sensor outputs a non-linear image with respect to the intensity of the input light, thereby expanding the dynamic range of the image sensing device.

By expanding the dynamic range of the image sensing device using the optical limiter made of materials having a non-linear characteristic with respect to the intensity of light, it becomes much easier to expand the dynamic range of the image sensing device without a separate device.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

**Claims**

1. An image sensing device, comprising:

   an optical limiter that converts an input image into a non-linear image at an intensity greater than a threshold intensity; and
   an image sensor that converts the non-linear input image into an electrical signal.

2. The device according to claim 1, wherein the image sensor comprises:

   a micro lens that condenses an input light;
   a colour filter that extracts a colour signal from a plurality of signals inputted from the micro lens; and
   a substrate that converts the extracted colour signal into the electrical signal.

3. The device according to claim 1, wherein the optical limiter is formed at a threshold distance from an image pickup surface of the image sensor.

4. The device according to claim 1, wherein the optical limiter is deposited on an upper portion of an image pickup surface of the image sensor.

5. The device according to claim 1, wherein the image sensor is one of a CCD (Charge Coupled Device) and a CMOS (Complementary Metal Oxide Semiconductor).

6. The device according to claim 1, wherein the threshold intensity is smaller than a saturated output intensity of the image sensor without the optical limiter.

7. An image pickup apparatus using an image sensing device, the apparatus comprising:

   an optical limiter that converts and outputs an input image into a non-linear image at an intensity greater than a threshold intensity;
   an image sensor that photoelectrically converts the image output by the optical limiter;
   a converter that converts and outputs the image from the image sensor into a digital signal; and
   a signal processor that performs signal processing to display the input image output by the converter.

8. The apparatus according to claim 7, wherein the image sensor comprises:

   a micro lens that condenses an input light;
   a colour filter that extracts a colour signal from a plurality of signals inputted from the micro lens; and
   a substrate that converts the extracted colour signal into the electrical signal.

9. The apparatus according to claim 7, wherein the optical limiter is formed at a threshold distance from an image pickup surface of the image sensor.

10. The apparatus according to claim 7, wherein the optical limiter is deposited on an upper portion of an image pickup surface of the image sensor.

11. The apparatus according to claim 7, wherein the image sensor is one of a CCD (Charge Coupled Device) and a CMOS (Complementary Metal Oxide Semiconductor).

12. The apparatus according to claim 7, wherein the threshold intensity is smaller than a saturated output intensity of the image sensor without the optical limiter.

13. An image sensing device comprising:

   means for converting an input image into a non-linear image at an intensity greater than a threshold intensity; and
   means for converting the non-linear input image into an electrical signal.

14. The device according to claim 13, wherein the means for converting the non-linear input image comprises:

   means for condensing an input light;
   means for extracting a colour signal from a plurality of signals inputted from the means for condensing; and
   means for converting the extracted colour signal into the electrical signal.

15. The device according to claim 13, wherein the means for converting the input image is formed at a threshold distance from an image pickup surface of the means for converting the non-linear input image.

16. The device according to claim 13, wherein the means for converting the input image is deposited on an upper portion of an image pickup surface of means for converting the non-linear input image.

17. The device according to claim 13, wherein the means for converting the non-linear input image is one of a CCD (Charge Coupled Device) and a CMOS (Complementary Metal Oxide Semiconductor).

# FIG. 1

# FIG. 2A

30

20

# FIG. 2B

20

31
33 } 30
35

# FIG. 3

# FIG. 4